# EUROPÄISCHE PATENTANMELDUNG

(11) **EP 3 223 115 A1**
(43) Veröffentlichungstag der Anmeldung: **27.09.2017**
(21) Anmeldenummer: 17160785.6
(22) Anmeldetag: 14.03.2017
(51) Int. Cl.: G06F 3/01, A41D 19/00, A41D 19/015

(54) **VORRICHTUNG ZUR AUFNAHME VON DATEN**

(30) Priorität: 24.03.2016 DE 102016205023
(71) Anmelder: HOMAG GmbH, 72296 Schopfloch (DE)
(72) Erfinder: Schneider, Franz, 78667 Villingendorf (DE)
(74) Vertreter: Hoffmann Eitle

(57) **Zusammenfassung**

Die vorliegende Erfindung betrifft einen Arbeitshandschuh, der zur Aufnahme von Daten vorgesehen ist. Ein solcher Arbeitshandschuh kommt bevorzugt im Bereich des Möbel- und Bauelementegewerbes zum Einsatz, weiter bevorzugt in Kombination mit einer Bearbeitungsmaschine zur Bearbeitung von insbesondere plattenförmigen Werkstücken aus Holz oder Holzwerkstoffen.

## Beschreibung

### Technisches Gebiet

Die vorliegende Erfindung betrifft einen Arbeitshandschuh, der zur Aufnahme von Daten vorgesehen ist. Ein solcher Arbeitshandschuh kommt bevorzugt im Bereich des Möbel- und Bauelementegewerbes zum Einsatz, weiter bevorzugt in Kombination mit einer Bearbeitungsmaschine zur Bearbeitung von insbesondere plattenförmigen Werkstücken aus Holz oder Holzwerkstoffen.

### Stand der Technik

Im Stand der Technik werden Informationen zu Werkstücken, die mit einer Bearbeitungsmaschine bearbeitet werden sollen, üblicherweise manuell mittels einer Tastatur oder ähnlichem in eine Steuereinrichtung eingegeben. Ein derartiges Vorgehen ist jedoch zeitintensiv, insbesondere bei Änderung der Bearbeitungsart oder beim Wechsel zwischen verschieden dimensionierten oder ausgestalteten Werkstücken.

Ferner stellt die manuelle Eingabe von Daten stets eine Fehlerquelle dar, da im Falle einer inkorrekten Eingabe falsche Bearbeitungsvorgänge durchgeführt werden. Dies führt zur Erhöhung des Ausschussanteils und in bestimmten Fällen sogar zur Beschädigung von Bearbeitungsaggregaten der Bearbeitungsmaschine.

Im Stand der Technik sind Handschuhe zur Aufnahme von Daten bekannt, die mit verschiedenen Sensoren ausgestattet sind. Beispielsweise ist es möglich, mittels eines am Handschuh angebrachten Bilderfassungssensors einen Barcode auszulesen und dem Nutzer Informationen anzuzeigen, die mit dem entsprechenden Barcode verknüpft sind. Ferner ist ein Handschuh bekannt, der an den Fingerkuppen mit leitenden Flächen ausgestattet ist, um beispielsweise eine elektrische Spannung zu ermitteln.

Die genannten Erfassungsmöglichkeiten sind jedoch lediglich zur punktuellen Aufnahme von Daten und zur Anzeige entsprechender Informationen vorgesehen.

### Gegenstand der Erfindung

Ziel der vorliegenden Erfindung ist es, eine Vorrichtung bereitzustellen, mit der Daten ermittelt und in einen Fertigungsablauf integriert werden können.

Der Gegenstand des Anspruchs 1 stellt zur Lösung eine Vorrichtung in der Gestalt eines Arbeitshandschuhs bereit. Weitere bevorzugte Ausführungsformen sind in den abhängigen Ansprüchen aufgeführt.

Der Erfindung liegt der Gedanke zugrunde, für einen Bearbeitungsbetrieb bereits frühzeitig eine Informationsbasis bereitzustellen.

Die vorliegende Erfindung betrifft einen Arbeitshandschuh zur Aufnahme/Erfassung von Daten, wobei der Arbeitshandschuh mit zumindest einer Sensoreinheit versehen ist, um Daten zu erfassen. Ferner umfasst der Arbeitshandschuh eine Übertragungseinheit, um die erfassten Daten an eine Steuereinheit einer Bearbeitungsmaschine zu übertragen/ zu senden.

Bei den erfassten Daten kann es sich um Werkstückdaten handeln, welche ein Werkstück spezifizieren. Beispiele hierfür sind eine Werkstückdicke bei plattenförmigen Werkstücken, eine Oberflächenrauigkeit, eine Art, Dicke und/oder Ausgestaltung eines Kantenmaterials, welches an einer Schmalseite eines plattenförmigen Werkstücks angebracht ist, oder eine Werkstückfeuchtigkeit. Als weiteres Beispiel ist ein am Werkstück vorgesehenes Dekor zu nennen, welches mittels eines Beschichtungsmaterials, wie eines Kantenmaterials oder eines Beschichtungsmaterials an einer Hauptfläche des Werkstücks, vorgesehen ist, oder alternativ mittels eines Druckers an diesem aufgebracht wurde.

Nachdem der Arbeitshandschuh über eine Übertragungseinheit verfügt, können die erfassten Daten zügig in einen Verarbeitungsprozess integriert werden. Somit müssen weniger Werkstückparameter manuell in eine Steuereinheit/Datenverarbeitungseinheit einer Bearbeitungsmaschine eingegeben werden. Fehlerhafte Eingaben werden vermieden, die andernfalls zu Ausschussteilen führen könnten. Darüber hinaus wird die Bedienung der Bearbeitungsmaschine beschleunigt und gleichzeitig intuitiver gestaltet. Auch trägt die Erfassung von Daten mittels eines Arbeitshandschuhs dazu bei, dass diese gewissermaßen beiläufig ermittelt werden können.

Auch hat sich gezeigt, dass die Motivation des Bedieners aufgrund des Einsatzes der hier beschriebenen, fortschrittlichen Technologie zunimmt. Ein weiterer Vorteil ist, dass sich der Bediener auf die Planung und Überwachung von Bearbeitungsvorgängen konzentrieren kann, da die für einen Bearbeitungsvorgang notwendigen Eingaben im Zuge der Werkstückhandhabung erfolgen.

Die erfindungsgemäße Vorrichtung in Form eines Arbeitshandschuhs kommt bevorzugt im Bereich der Herstellung von Möbel- und Bauelementen zum Einsatz. Entsprechend handelt es sich bei der genannten Bearbeitungsmaschine insbesondere um eine Holzbearbeitungsmaschine, mit der beispielsweise Einlagebretter für Regale, Fußbodenpaneele, Küchenarbeitsplatten, usw. be- und/oder verarbeitet werden können.

Gemäß einer bevorzugten Ausführungsform ist die Übertragungseinheit eine drahtlose Übertragungseinheit. Insbesondere kann es sich um ein WLAN-Modul, ein Bluetooth-Modul, eine Infrarot-Übertragungseinheit, eine Mikrowellenübertragungseinheit oder eine Radarstrahlen-Übertragungseinheit handeln. Auf diese Weise wird die Bewegungsfreiheit des Bedieners nicht eingeschränkt, während eine sichere Konnektivität zwischen Übertragungseinheit und Steuereinheit der Bearbeitungsmaschine gewährleistet wird.

Gemäß einer weiteren Ausführungsform zeichnet sich der Arbeitshandschuh dadurch aus, dass dieser eine Aufnahme zum Einführen einer insbesondere wiederaufladbaren Batterie sowie gemäß einer weiteren bevorzugten Variante zusätzlich eines Lademoduls zum ggf. berührungslosen Aufladen einer solchen wiederaufladbaren Batterie umfasst. Auf diese Weise kann die Flexibilität und Verfügbarkeit weiter gesteigert werden.

Ferner können im oder am Handschuh Sensoreinheiten integriert oder angebracht sein, die einen Abstand erfassen können. Z.B. kann durch Einsatz von Abstandssensoren in Daumen und Mittelfinger des Handschuhs die Dicke eines plattenförmigen Werkstückes gemessen werden. Dazu wird in einer bevorzugten Ausführungsform das Werkstück so gegriffen, dass der Daumen auf der Oberseite des Werkstücks und der Mittelfinger gegenüberliegend auf der Unterseite zum Liegen kommt. Somit ist ein Überlappungsbereich zwischen den Abstandssensoren zwischen Mittelfinger und Daumen gewährleistet. Da es sich um Werkstücke aus bspw. Holz oder Holzwerkstoffen handelt, sind z.B. induktive Sensoren, kapazitive Sensoren, Magnetsensoren oder Ultraschallsensoren einsetzbar.

Im Allgemeinen ist es vorgesehen, dass die Sensoreinheit eingerichtet ist, eine Werkstückeigenschaft zu erfassen, die ausgewählt ist aus Farbe, Materialbeschaffenheit, Oberflächenbeschaffenheit, Profilierung, Geometrie, insbesondere Dicke und Längen-/Dickenverhältnis. Daten über diese Messgrößen tragen dazu bei, bei einfacher Bedienbarkeit die Betriebszuverlässigkeit zu erhöhen.

In einer weiteren Ausführungsform sind Fingerkuppen des Arbeitshandschuhs mit leitenden Sensorflächen versehen.

Ferner kann der Arbeitshandschuh aus einem elastischen Material, insbesondere einem Gewebematerial, gefertigt sein, wobei Fingerabschnitte des Arbeitshandschuhs mit einer abriebfesten Schicht beschichtet sein. Somit werden die Hände eines Bedieners geschützt, während die Beweglichkeit der Finger im Wesentlichen uneingeschränkt möglich ist.

Gemäß einer Ausführungsform umfasst die Sensoreinheit einen Feuchtigkeitssensor. Auf diese Weise kann gerade bei Werkstücken aus Holz oder Holzwerkstoffen eine Restfeuchtigkeit ermittelt werden, um auf Grundlage dieser Daten Bearbeitungs- und/oder Behandlungsvorgänge für Werkstücke noch besser abzustimmen. Rein beispielhaft können einem Haftmittel punktuell zusätzliche Additive hinzugefügt werden, um eine Anhaftung eines Beschichtungsmaterials, wie eines Kantenmaterials, an einem Werkstück mit bestimmten Kennwerten weiter zu verbessern.

Gemäß einer weiteren Ausführungsform kann die Sensoreinheit einen Rauhigkeitssensor umfassen, mit dem die Oberflächenrauhigkeit eines Werkstücks ermittelt werden kann. Diese Informationen kann beispielsweise dazu genutzt werden, Vorbehandlungsverfahren auf ein konkretes Werkstück abzustimmen. Wird ein Werkstück mit einer hohen Oberflächenrauhigkeit in einem nachrangigen Verfahrensschritt bedruckt, so kann eine hohe Oberflächenrauhigkeit das Aufbringen einer Ausgleichsschicht erfordern. Ferner ist es möglich, die Menge eines aufzutragenden Haftmittels, mit welchem beispielsweise ein Kantenmaterial an einer Schmalfläche angebracht werden soll, auf Grundlage der Daten betreffend die Oberflächenrauhigkeit gezielt zu steuern.

Gemäß einer weiteren Ausführungsform umfasst die Sensoreinheit einen Bilderfassungssensor. Ein Bilderfassungssensor kann genutzt werden, um einen Barcode zu erfassen, der in der Fertigungstechnik verwendet wird, um werkstückspezifische Daten zu hinterlegen.

Darüber hinaus kann ein Bilderfassungssensor, der als CCD-Sensor ausgebildet sein kann, genutzt werden, um ein Dekor des Werkstücks zu erfassen. Ein CCD-Sensor hat sich als vorteilhaft erwiesen, da die ermittelten digitalen Daten besonders schnell an eine Steuereinheit einer Bearbeitungsmaschine weitergegeben werden können.

Gemäß einer weiteren Ausführungsform umfasst der Arbeitshandschuh ferner eine optische Anzeigeeinrichtung, beispielsweise einen Anzeigebildschirm oder eine Leuchteinrichtung. Mittels der Anzeigeeinrichtung kann eine visuell wahrnehmbare Information dargestellt werden.

Im Falle eines Anzeigebildschirms kann beispielsweise ein Messwert als ein Beispiel der erfassten Daten dargestellt werden, so dass der Bediener diesen hinsichtlich Plausibilität überprüfen kann.

Im Fall einer Leuchteinrichtung, wie einer LED-Leuchte, kann beispielsweise mittels einer bestimmten Farbwiedergabe anzeigt werden, ob eine Datenerfassung erfolgreich durchgeführt werden konnte, eine Datenerfassung und/oder die Datenübertragung zur Steuereinrichtung erfolgt ist oder die Steuereinrichtung ein Freigabesignal an den Arbeitshandschuh übertragen hat. Somit kann der Bediener intuitiv erkennen, dass das derzeit gehandhabte Werkstück in eine Bearbeitungsmaschine eingelegt werden kann.

Gemäß einer weiteren Ausführungsform umfasst der Arbeitshandschuh eine akustische Wiedergabeeinrichtung, insbesondere einen Lautsprecher. Eine solche akustische Wiedergabeeinrichtung kann dem Bediener bestätigen, wenn eine Datenerfassung erfolgreich durchgeführt werden konnte, eine Datenübertragung zur Steuereinrichtung erfolgt ist oder die Steuereinrichtung ein Freigabesignal an den Arbeitshandschuh übertragen hat. Beispielsweise wird ein Piep-Ton ausgegeben, wobei je nach Bestätigungsgrund unterschiedliche Töne ausgegeben werden können.

Für den Einsatz bei einer Beschichtungsmaschine als einem Beispiel einer Bearbeitungsmaschine kann die Sensoreinheit eingerichtet sein, eine Beschichtungsmaterialeigenschaft zu erfassen, die ausgewählt ist aus Farbe, Materialbeschaffenheit, Oberflächenbeschaffenheit und Geometrie, insbesondere Dicke und/oder Höhe, des Beschichtungsmaterials.
Ferner betrifft die vorliegende Erfindung eine Kombination aus einem Arbeitshandschuh gemäß einem der vorangegangenen Aspekte mit einer Bearbeitungsmaschine, welche Bearbeitungsmaschine eine Steuereinheit aufweist. Die Steuereinheit ist eingerichtet, Daten zu verarbeiten, die von der Sensoreinheit des Arbeitshandschuhs zur Steuereinheit übertragen werden.

Bei der genannten Bearbeitungsmaschine kann es sich um eine sogenannte Durchlaufmaschine handeln, bei der Werkstücke mittels einer Fördereinrichtung entlang mindestens einer, bevorzugt mehrerer Bearbeitungsstationen bewegt werden, oder um eine sogenannte Stationärmaschine, bei der Werkstücke beispielsweise mittels Klemmeinrichtungen oder Saugspannern gehalten werden, während dieses bearbeitet wird. Ferner kann die Bearbeitungsmaschine eine Kombination aus einer Stationär- und einer Durchlaufmaschine bestreffen.

Im Rahmen einer solchen Bearbeitungsmaschine können unterschiedlichste Bearbeitungswerkzeuge und/oder Bearbeitungsaggregate zum Einsatz kommen, wie beispielsweise spanend arbeitende Werkzeuge (Säge, Bohrer, Fräser, etc.), Kantenanleimaggregate, Beschichtungsaggregate, Kaschieraggregate, usw..

Bevorzugt kommt der erfindungsgemäße Arbeitshandschuh in Kombination mit einer Beschichtungsmaschine, insbesondere zur Anbringung eines Kantenbandes an einer Schmalseite eines Werkstücks, zum Einsatz.

Die Bearbeitungsmaschine kann mit einer weiteren Messeinrichtung ausgestattet sein, welche die bereits mittels des Arbeitshandschuhs ermittelten Daten nochmals mit dem zugeführten Werkstück abgleicht. Auf diese Weise kann die Prozesssicherheit weiter erhöht werden.

Gemäß einer weiteren Ausführungsform ist es vorgesehen, dass die Steuereinrichtung der Bearbeitungsmaschine eingerichtet ist, ein Bearbeitungswerkzeug und/oder Bearbeitungsaggregat oder eine weitere Einheit der Bearbeitungsmaschine auf Grundlage der mittels des Arbeitshandschuhs ermittelten Daten zu steuern, beispielsweise ein Beschichtungsaggregat, eine Fördereinrichtung und/oder eine Nachbearbeitungseinrichtung. Auf diese Weise kann die Anzahl der erforderlichen Bedieneingriffe einer Bedienperson reduziert werden, und die Steuereinrichtung kann die Bearbeitungsmaschine beispielsweise je nach den ermittelten Daten selbsttätig auf eine bestimmte Betriebsart, einen bestimmten Beschichtungsvorgang usw. einstellen. Hierdurch ergibt sich eine vereinfachte Bedienung und hoher Zuverlässigkeit.

Beispielsweise kann die Steuereinrichtung einer Bearbeitungsmaschine mit einem Beschichtungsaggregat eingerichtet sein, unter Berücksichtigung mindestens einer Werkstückeigenschaft, insbesondere Farbe und/oder Geometrie, ein durch das Beschichtungsaggregat zu fügendes Beschichtungsmaterial festzulegen, beispielsweise aus einer Vielzahl von verschiedenen Beschichtungsmaterialien auszuwählen.

Die vorliegende Erfindung betrifft ferner die Verwendung eines Arbeitshandschuhs gemäß einem der vorangegangenen Aspekte und/oder ein Verfahren unter Verwendung eines Arbeitshandschuhs gemäß einem der vorangegangenen Aspekte, wobei ein Bediener ein Werkstück aus zumindest abschnittsweise Holz oder Holzwerkstoffen mit diesem Arbeitshandschuh berührt und/oder greift, und, insbesondere durch Kontakt mit dem Werkstück, die Sensoreinheit aktiviert wird, um Daten des Werkstücks zu erfassen. Nach Erfassen der Daten können diese mittels einer Übertragungseinheit an eine Steuereinheit einer Bearbeitungsmaschine übertragen werden.

### Kurze Beschreibung der Zeichnung

- Figur 1: zeigt eine bevorzugte Ausführungsform eines erfindungsgemäßen Arbeitshandschuhs sowie, in schematischer Weise, dessen Interaktion mit einer Steuereinheit einer Bearbeitungsmaschine
- Figur 2: zeigt den in Figur 1 dargestellten Handschuh von der Handflächenseite betrachtet

### Beschreibung der bevorzugten Ausführungsform

Nachfolgend wird anhand der beigefügten Figur eine bevorzugte Ausführungsform der vorliegenden Erfindung beschrieben.

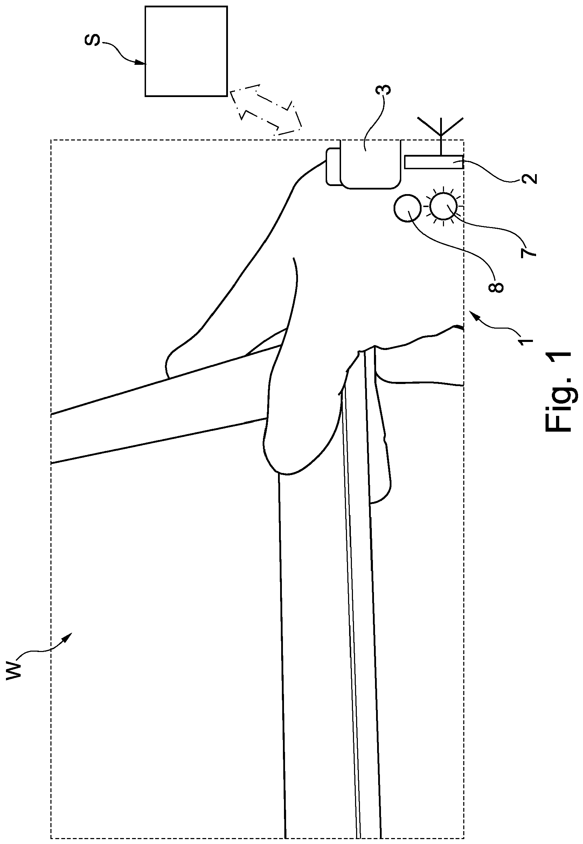

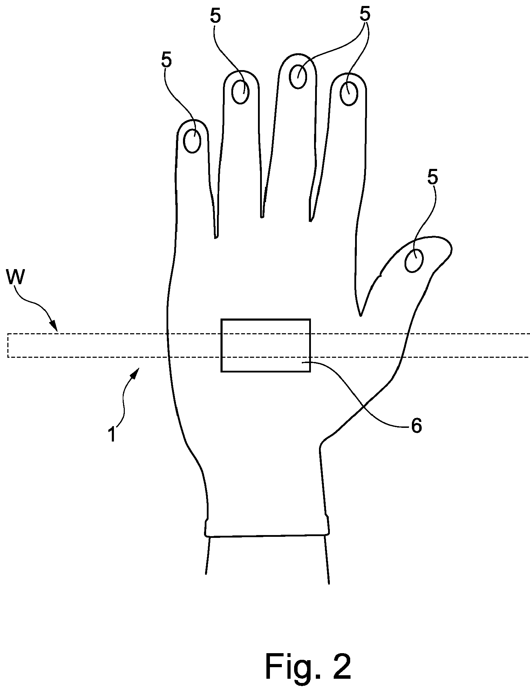

Ein Arbeitshandschuh 1, der mit einer drahtlosen Übertragungseinheit 2 ausgestattet ist, wird gemäß Figur 1 bei der Prüfung eines plattenförmigen Werkstücks aus Holz dargestellt. Hierzu berührt der Nutzer des Arbeitshandschuhs 1 das Werkstück W und aktiviert somit eine Sensoreinheit des Arbeitshandschuhs 1. Der Arbeitshandschuh 1 ist an den Fingerkuppen 5 mit leitenden Flächen versehen (siehe insbesondere Figur 2), die an den Fingerkuppen 5 angebracht sind oder in Form von leitenden Fasern im Bereich der Fingerkuppen 5 in den Arbeitshandschuh eingewebt sind.

Ferner ist an der Innenhandfläche des Arbeitshandschuhs 1 ein Kontaktsensor 6 angebracht, der mit druckempfindlichen Elementen versehen ist. Dabei wird der Kontaktsensor 6 beispielsweise gegen eine Werkstückschmalseite eines Werkstücks W gedrückt, um auf Grundlage der Erfassung die Werkstückdicke zu ermitteln.

Insbesondere ermittelt der Kontaktsensor 6 einen Anlagebereich an einer Werkstückschmalseite. Drückt der Nutzer des Arbeitshandschuh 1 den Kontaktsensor 6 in der in Figur 2 dargestellten Ausrichtung gegen ein Werkstück W, so wird durch den Kontaktsensor 6 eine Kontaktfläche ermittelt. Der Kontaktsensor 6 erkennt hierbei auf Grund der Kontaktfläche, dass die Werkstückdicke in der in Figur 2 dargestellten Situation in vertikaler Richtung verläuft, nachdem das Werkstück in horizontaler Richtung über den Kontaktsensor 6 hinaus verläuft.

Diese Daten werden mittels der Übertragungseinheit 2 an eine Steuereinheit S einer Bearbeitungsmaschine übertragen. Somit liegen der Steuereinheit S bereits Informationen über ein Werkstück W vor, welches vom Nutzer des Arbeitshandschuhs 1 in die Bearbeitungsmaschine eingelegt oder neu positioniert wird.

Wird beispielsweise eine bestimmte Werkstückdicke festgestellt, so wird innerhalb der Bearbeitungsmaschine ein Bearbeitungsaggregat (Fräser, Säge, usw.) bereits entsprechend zugestellt. Nachdem das Werkstück in die Bearbeitungsmaschine eingeführt wurde, kann dieses ohne Zeitverlust mittels einer Säge oder eines Fräsers spannend bearbeitet, da das entsprechende Bearbeitungsaggregat bereits auf das Werkstück "vorbereitet" ist.

Ferner ist es möglich, mittels zwei Fingern, und somit zwei Finger-Handschuhflächenbereichen des Arbeitshandschuhs 1, eine Ober- und Unterseite eines Werkstücks W zu berühren. Auf Grundlage der Information gegenüberliegender Fingerkuppen 5 wird eine kapazitive Erfassung der Werkstückdicke angenommen, und diese Daten werden mittels der Übertragungseinheit 2 an die Steuereinheit S der Bearbeitungsmaschine weitergeleitet.

In einem Beispiel betreffen die Daten die Dicke des Werkstücks W, die dazu genutzt werden können, in der Bearbeitungsmaschine ein bestimmtes Kantenmaterial (Kantenband) bereitzuhalten bzw. zuzuführen. Der Bediener der Bearbeitungsmaschine muss somit den Wert der Werkstückdicke nicht manuell eingeben, sondern diese Daten werden während der Handhabung des Werkstücks W ermittelt und an die Steuereinheit S übertragen. Ebenso ist eine Plausibilitätsprüfung möglich, falls die Solldicke des zu produzierenden Werkstücks bekannt ist.

Die Steuereinheit S kann einen entsprechenden Steuerbefehl zu einem Kantenanleimaggregat ausgeben, um ein Kantenmaterial zur Beschichtung einer bestimmten Schmalflächenhöhe bereitzuhalten. Dies beschleunigt nicht nur die Bedienung der Bearbeitungsmaschine, sondern reduziert auch wesentlich fehlerhafte Eingaben.

Darüber hinaus ist der Arbeitshandschuh 1 mit einem Bilderfassungssensor 3 ausgestattet, der am Handrücken des Arbeitshandschuhs 1 angeordnet ist. Der Bilderfassungssensor 3 ist dazu eingerichtet, in einem Erfassungsbereich eine optische Datenerfassung durchzuführen.

Gemäß einer weiteren Ausführungsform kann der Bilderfassungssensor jedoch auch an der Handinnenseite des Arbeitshandschuhs angebracht sein.

Dabei ist es möglich, den Bilderfassungssensor 3 als Laserscanner auszugestalten, um einen Barcode zu erfassen. Gemäß einer weiteren Ausführungsform ist der Bilderfassungssensor 3 als CCD-Kamera ausgebildet, mit der die Farbe und Musterung der Oberflächenbeschichtung des Werkstücks W ermittelt werden können, um Bearbeitungsvorgängen konkret mit dem Werkstück abzustimmen.

Beispielsweise kann ein bestimmtes Kantenband zur Beschichtung einer Schmalfläche eines Werkstücks W ausgewählt werden, welches mit der Beschichtung der Hauptflächen des Werkstücks W abgestimmt ist. Somit muss der Nutzer die Auswahl eines bestimmten Kantenbandes nicht mehr manuell durchführen, sondern die Auswahl kann für jedes einzelne Werkstück nach Bedarf getroffen werden. Folglich wird nicht nur eine hohe Eingabesicherheit gewährleistet, sondern auch die Wechselzeit zwischen unterschiedlichen Beschichtungsvorgängen, also Beschichtungsvorgängen mit unterschiedlichen Kantenbändern, reduziert. Die Bearbeitungsmaschine kann gewissermaßen vorausschauend arbeiten, da bereits die konkreten Anforderungen an ein bestimmtes, vom Bediener in die Bearbeitungsmaschine eingeführtes Werkstücks kommuniziert werden.

Die ermittelten Daten werden werkstückspezifisch ermittelt. Zusätzlich können in der Steuereinheit S der Bearbeitungsmaschine weitere Daten hinterlegt sein, die beispielsweise durch eine manuelle Eingabe erfolgen.

Darüber hinaus können in der Bearbeitungsmaschine weitere Sensoren vorgesehen sein, um weitere Daten des Werkstücks zu ermitteln, beispielsweise dessen Dimensionen. Somit können in der Steuereinheit S verschiedene Informationen über ein Werkstück zusammengeführt werden, und auf Grundlage zumindest eines Teils dieser Informationen Bearbeitungsvorgänge initiiert werden.

In diesem Zusammenhang ist es ebenfalls möglich, dass die vom Arbeitshandschuh 1 erfassten Daten durch weitere Sensoren in der Bearbeitungsmaschine verfeinert werden. Beispielsweise kann durch den Arbeitshandschuh 1 eine Werkstückdicke ermittelt werden, um bereits ein Voreinstellung von Bearbeitungsaggregaten der Bearbeitungsmaschine vorzunehmen. Wird nachfolgend das Werkstück durch die Bearbeitungsmaschine gefördert bzw. in dieser angeordnet, ermitteln weitere Sensoren die exakte Werkstückdicke, so dass die bereits vorausgerichteten Bearbeitungsaggregate unmittelbar vor der Bearbeitung lediglich nachjustiert werden müssen. Somit kann die Taktzeit bei wechselnden Werkstücken wesentlich erhöht werden.

Der Arbeitshandschuh 1 gemäß der vorliegenden Ausführungsform ist mit einer Leuchteinrichtung 7 (LED-Leuchte) sowie einem Lautsprecher 8 versehen, wobei in weiteren Modifikationen auch eine Leuchteinrichtung 7 oder ein Lautsprecher 8 vorgesehen sein kann.

Mittels der Leuchteinrichtung 7 kann beispielsweise eine erfolgreiche Datenermittlung mit einem grünen Licht angezeigt werden, so dass der Nutzer erkennt, dass das derzeit gehandhabte Werkstück an eine Bearbeitungsmaschine übergeben werden kann.

Alternativ oder zusätzlich kann mit dem Lautsprecher 8 eine erfolgreiche Datenerfassung angezeigt werden. Bei Kombination der akustischen und visuellen Bestätigung wird somit dem Nutzer mitgeteilt, dass zum einen eine korrekte Datenermittlung (Messwertermittlung) vorliegt, also der oder die Sensoren einen Messwert erfassen konnten, und zum anderen die Übertragung der Daten zur Bearbeitungsmaschine stattgefunden hat.

In der vorangegangenen Beschreibung wurde der Einsatz eines Arbeitshandschuhs 1 diskutiert. Gemäß einer weiteren Modifikation können jedoch zwei Arbeitshandschuhe zum Einsatz kommen, die ggf. miteinander interagieren.

Beispielsweise ist es möglich, zunächst mit einem der Arbeitshandschuhe eine erste Datenerfassung durchzuführen und nachfolgend mittels des zweiten Arbeitshandschuhs die Datenermittlung nochmals hinsichtlich Plausibilität zu überprüfen.

Gemäß einer weiteren Modifikation ist es möglich, zwei Arbeitshandschuhe mit Sensoreinheiten auszustatten, sodass bspw. zwischen zwei Fingerkuppen unterschiedlicher Arbeitshandschuhe, die mit Sensoren ausgestattet sind, eine Längenmessung an einem Werkstück durchzuführen.

Ferner können mit den zwei Arbeitshandschuhen getrennte Messungen durchgeführt werden, deren Ergebnis nachfolgend in der Steuereinrichtung der Bearbeitungsmaschine gemittelt werden.

Obwohl in der in Fig. 1 dargestellten Ausführungsform die Elemente 2, 3, 7, 8 als getrennte Baugruppen am Handrücken des Arbeitshandschuhs 1 vorgesehen sind, ist es gemäß einer weiteren Modifikation möglich, Einzelelemente im Bereich des Handgelenks vorzusehen. Gemäß einer besonders bevorzugten Ausführungsform werden die Leuchteinrichtung 7 und der Lautsprecher 8 im Bereich des Handgelenks vorgesehen. Auch ein Anzeigebildschirm als Ausführungsform einer optischen Anzeigeeinrichtung 7, die in der vorliegenden Ausführungsform als Leuchteinrichtung bezeichnet wird, kann im Bereich des Handgelenks angebracht sein.

## Patentansprüche

1. Arbeitshandschuh (1) zur Aufnahme von Daten,
welcher Arbeitshandschuh (1) mit zumindest einer Sensoreinheit versehen ist, um Daten zu erfassen,
wobei der Arbeitshandschuh (1) ferner eine Übertragungseinheit (2) aufweist, um die erfassten Daten an eine Steuereinheit (S) einer Bearbeitungsmaschine zu übertragen.

2. Arbeitshandschuh gemäß Anspruch 1, **dadurch gekennzeichnet, dass** die Übertragungseinheit (2) eine drahtlose Übertragungseinheit ist, insbesondere ein WLAN-Modul, ein Bluetooth-Modul, eine Infrarot-Übertragungseinheit, eine MikrowellenÜbertragungseinheit oder eine Radarstrahlen-Übertragungseinheit.

3. Arbeitshandschuh (1) gemäß einem der vorangegangenen Ansprüche, **dadurch gekennzeichnet, dass** der Arbeitshandschuh (1) eine Aufnahme zum Einführen einer insbesondere wiederaufladbaren Batterie, sowie ferner bevorzugt ein Lademodul zum insbesondere berührungslosen Aufladen der wiederaufladbaren Batterie umfasst.

4. Arbeitshandschuh (1) gemäß einem der vorangegangenen Ansprüche, **dadurch gekennzeichnet, dass** die Sensoreinheit einen Sensor umfasst, der eingerichtet ist, einen Winkel zwischen zwei Finger-Handschuhflächenbereichen, insbesondere einer Daumen-Handschuhfläche und einer Zeigefinger-Handschuhfläche, zu ermitteln.

5. Arbeitshandschuh (1) gemäß einem der vorangegangenen Ansprüche, **dadurch gekennzeichnet, dass** Fingerkuppen (5) des Arbeitshandschuhs mit leitenden Sensorflächen versehen sind.

6. Arbeitshandschuh (1) gemäß einem der vorangegangenen Ansprüche, **dadurch gekennzeichnet, dass** der Arbeitshandschuh ein elastisches Material, insbesondere Gewebematerial, aufweist, wobei Fingerabschnitte des Arbeitshandschuhs mit einer abriebfesten Schicht beschichtet sind.

7. Arbeitshandschuh (1) gemäß einem der vorangegangenen Ansprüche, **dadurch gekennzeichnet, dass** die Sensoreinheit einen Feuchtigkeitssensor umfasst.

8. Arbeitshandschuh (1) gemäß einem der vorangegangenen Ansprüche, **dadurch gekennzeichnet, dass** die Sensoreinheit einen Rauhigkeitssensor umfasst.

9. Arbeitshandschuh (1) gemäß einem der vorangegangenen Ansprüche, **dadurch gekennzeichnet, dass** die Sensoreinheit einen Bilderfassungssensor (3) aufweist, der insbesondere an einem Handrücken oder einer Handinnenseite des Arbeitshandschuhs (1) angebracht ist.

10. Arbeitshandschuh (1) gemäß einem der vorangegangenen Ansprüche, **dadurch gekennzeichnet, dass** der Arbeitshandschuh (1) eine optische Anzeigeeinrichtung (7), insbesondere einen Anzeigebildschirm oder eine Leuchteinrichtung, umfasst.

11. Arbeitshandschuh (1) gemäß einem der vorangegangenen Ansprüche, **dadurch gekennzeichnet, dass** der Arbeitshandschuh (1) eine akustische Wiedergabeeinrichtung (8), insbesondere einen Lautsprecher, umfasst.

12. Arbeitshandschuh (1) gemäß einem der vorangegangenen Ansprüche, **dadurch gekennzeichnet, dass** der Arbeitshandschuh (1) einen Kontaktsensor (6) an einer Handinnenseite des Arbeitshandschuhs (1) aufweist.

13. Arbeitshandschuh (1) gemäß einem der vorangegangenen Ansprüche, **dadurch gekennzeichnet, dass** im oder am Arbeitshandschuh eine oder mehrere Sensoreinheiten integriert oder angebracht sein, um einen Abstand zu erfassen, wobei bevorzugt ist, dass die Sensoreinheit(en) insbesondere einen oder mehrere induktive Sensoren, kapazitive Sensoren, Magnetsensoren oder Ultraschallsensoren umfassen.

14. Bearbeitungsmaschine zur Bearbeitung von Werkstücken, insbesondere von plattenförmigen Werkstücken (W) aus Holz oder Holzwerkstoffen, welche Bearbeitungsmaschine eine Steuereinheit (S) sowie ein mittels der Steuereinheit (S) steuerbares Bearbeitungsaggregat umfasst, in Kombination mit einem Arbeitshandschuh (1) gemäß einem der Ansprüche 1-13.

15. Verwendung eines Arbeitshandschuhs (1), insbesondere eines Arbeitshandschuhs gemäß einem der Ansprüche 1-13,
welcher Arbeitshandschuh (1) mit zumindest einer Sensoreinheit versehen ist, um Daten zu erfassen, und der eine Übertragungseinheit (2) aufweist, um die erfassten Daten an eine Steuereinheit (S) einer Bearbeitungsmaschine zu leiten,
wobei ein Bediener ein Werkstück aus zumindest abschnittsweise Holz oder Holzwerkstoffen mit diesem Arbeitshandschuh berührt oder greift und, insbesondere durch Kontakt mit dem Werkstück, die Sensoreinheit aktiviert wird, um Daten des Werkstücks aus zumindest abschnittsweise Holz oder Holzwerkstoffen zu erfassen.
